# EUROPEAN PATENT APPLICATION

(11) **EP 1 760 945 A2**
(43) Date of publication of application: **07.03.2007**
(21) Application number: 06018094.0
(22) Date of filing: 30.08.2006
(51) Int. Cl.: H04L 12/28

(54) **Wireless LAN security system and method**

(30) Priority: 01.09.2005 KR 20050081434
(71) Applicant: Samsung Electronics Co., Ltd., Suwon-si, Gyeonggi-Do (KR)
(72) Inventor: Song, Jeong-Ki, Seocho-gu, Seoul (KR)
(74) Representative: Lang, Johannes

(57) **Abstract**

A wireless LAN security system and method. The system includes a separate server managing an encryption key and an authentication certificate used for security, and providing the encryption key and the authentication certificate to an apparatus that requests them. Such apparatus including a wireless LAN terminal requesting the encryption key and the authentication certificate from the key management server and receiving them, and a wireless LAN access point requesting the encryption key and the authentication certificate from the key management server and receiving them. Accordingly, a user does not have to directly input the encryption key and the authentication certificate. Thus, a data protection level in wireless transmission and a security level of user authentication can be enhanced.

## Description

### BACKGROUND OF THE INVENTION

### Field of the Invention

The present invention relates to a wireless LAN security system and method.

### Description of the Related Art

The field of Wireless Fidelity (WiFi or Wi-Fi) technology security is regulated by internal standards of IEEE 802.11, WiFi Protected Access (WPA), and IEEE 802.11i. According to the IEEE 802.11 completed in 1999, data in wireless transmission is protected using Wired Equivalent Privacy (WEP) technology. The WPA is a standard established by the WiFi Alliance to be used as an industrial standard before the IEEE 802.11i was completed. The WPA protects data in wireless transmission by using Temporal Key Integrity Protocol (TKIP) technology, and the IEEE 802.11i protects data in wireless transmission by applying enhanced encryption technologies of TKIP and CCMP (Counter Mode with Cipher Block Chaining Message Authentication Code Protocol). WPA2 is a WiFi industrial standard having the same contents as the IEEE 802.11i.

The WPA, WPA2 and IEEE 802.11i include an authentication to AAA server (Authentication, Authorization and Accounting server) by applying IEEE 802.1X/EAP (Extensible Authentication Protocol), as well as a data encryption. In the case of Transport Layer Security (TLS) among authentication methods of the IEEE 802.1X/EAP, a WiFi station is authenticated using Secure Socket Layer (SSL)/TLS technology on a TCP/IP (Transmission Control Protocol/Internet Protocol) layer.

Meanwhile, in order to encrypt data in wireless transmission, an encryption key is required. The more complicated the encryption key is, the more safely the data can be transmitted. WiFi security technology can be classified into two fields according to how the encryption key is managed: pre-shared key methods (for example, WEP-PSK, WPA-PSK, etc.) and AAA server authentication key methods (for example, WPA-EAP, IEEE 802.11i-EAP).

However, such encryption methods have problems.

Since a user has to input keys in the pre-shared key (PSK) method, there is a very high possibility of information leakage. Although an encryption level is very high since high security technology such as TLS (Transport Layer Security) and the like is used in the AAA server authentication key method, an authentication certificate made in the server should be hardcoded in each WiFi station (wireless LAN terminal, referred to as "terminal" hereinafter) so that there is a possibility of information leakage to developers.

Accordingly, a wireless LAN security system and method that can solve the problems and enhance the security level of the wireless LAN (local area network) system is required. That is, a wireless LAN security system and method in which a user can manage an encryption key without directly inputting the key is required.

### SUMMARY OF THE INVENTION

It is an objective of the present invention to provide a wireless LAN security system and method capable of efficiently managing an encryption key and an authentication certificate which are core elements of encryption in wireless transmission.

It is another objective of the present invention is to provide a wireless LAN security system and method in which a user can manage an encryption key and an authentication certificate without directly inputting them.

According to an aspect of the present invention, there is provided a wireless LAN security system, comprising: a key management server storing an encryption key and an authentication certificate for system security, and providing the encryption key and the authentication certificate to an apparatus that requests them; a wireless LAN terminal requesting the encryption key and the authentication certificate from the key management server and receiving them; and a wireless LAN access point requesting the encryption key and the authentication certificate from the key management server and receiving them.

The key management server may determine whether the apparatus requesting the encryption key and the authentication certificate has a right to use the encryption key and the authentication certificate, and provide the requested encryption key and authentication certificate to the apparatus only when the apparatus has the right.

The key management server may further store an encryption method between the wireless LAN access point and the wireless LAN terminal.

The wireless LAN access point may further receive an encryption method of the wireless LAN terminal from the key management server.

The wireless LAN access point may set up an initial mode of its own using the encryption method provided from the key management server.

The wireless LAN terminal may set up its own encryption method according to the initial mode of the wireless LAN access point obtained in a process of scanning the wireless LAN access point, and performs an association with the wireless LAN access point using the encryption method.

The wireless LAN terminal and the wireless LAN access point may have address information of the key management server.

The wireless LAN terminal and the wireless LAN access point may meet international standards of IEEE 802.11, WPA (WiFi Protected Access), or IEEE 802.11i.

The system may further comprise an authentication server storing authentication information used to authenticate the wireless LAN terminal when the wireless LAN terminal and the wireless LAN access point are connected with each other.

The wireless LAN terminal and the wireless LAN access point may have address information of the authentication server.

According to another aspect of the present invention, there is provided a key management server in a wireless LAN security system, comprising: a storage unit storing an encryption key and an authentication certificate to be provided to a wireless LAN access point and a wireless LAN terminal; and a controller providing the wireless LAN access point and the wireless LAN terminal with the encryption key and the authentication certificate when the encryption key and authentication certificate are requested by the wireless LAN access point or the wireless LAN terminal.

The controller may determine whether the wireless LAN access point or the wireless LAN terminal requesting the encryption key and authentication certificate has a right to receive the encryption key and the authentication certificate, and provide the requested encryption key and authentication certificate only when the wireless LAN access point or the wireless LAN terminal has the right.

The storage unit may further store information on an encryption method between the wireless LAN access point and the wireless LAN terminal, the information being provided to the wireless LAN access point.

According to still another aspect of the present invention, there is provided a wireless LAN security method performed at a wireless LAN terminal, comprising the steps of: performing an association with a wireless LAN access point; accessing a key management server through the wireless LAN access point; requesting an encryption key and an authentication certificate from the key management server; receiving the encryption key and the authentication certificate from the key management server; and performing an association with the wireless LAN access point using the received encryption key and authentication certificate.

A first association performed with the wireless LAN access point may be performed by applying open authentication.

The method may further comprise the step of changing an encryption method of the wireless LAN terminal by scanning the wireless LAN access point to perform an association with the wireless LAN access point using the provided encryption key and authentication certificate and applying a mode of the wireless LAN access point.

According to yet another aspect of the present invention, there is provided a wireless LAN security method performed at a wireless LAN access point, comprising the steps of: accessing a key management server; requesting an encryption key and an authentication certificate from the key management server; receiving the encryption key and the authentication certificate from the key management server; and performing an association with a wireless LAN terminal using the received encryption key and authentication certificate.

The method may further comprise the steps of: receiving an encryption method of the wireless LAN terminal from the key management server; and setting up an initial mode by setting the received encryption method as the encryption method to be used for association with the wireless LAN terminal.

The method may further comprise the step of receiving an authentication from the authentication server using the received encryption key and authentication certificate.

According to yet another aspect of the present invention, there is provided a wireless LAN security method in a key management server, comprising the steps of: receiving a request for an encryption key and an authentication certificate from a wireless LAN terminal or a wireless LAN access point; and providing the wireless LAN terminal or the wireless LAN access point with the encryption key and the authentication certificate.

The method may further comprise the step of determining whether the wireless LAN terminal or the wireless LAN access point requesting the encryption key and the authentication certificate has a right to receive the encryption key and the authentication certificate, and providing the requested encryption key and authentication certificate only when the wireless LAN terminal or the wireless LAN access point is determined to have the right.

The method may further comprise the step of providing the wireless LAN access point with an encryption method between the wireless LAN access point and the wireless LAN terminal.

According to yet another aspect of the present invention, there is provided a wireless LAN security method, comprising the steps of: requesting, at a wireless LAN terminal and a wireless LAN access point, an encryption key and an authentication certificate from a key management server; receiving, at the wireless LAN terminal and the wireless LAN access point, the requested encryption key and authentication certificate; and performing, at the wireless LAN terminal and the wireless LAN access point, an association between the wireless LAN terminal and the wireless LAN access point.

### BRIEF DESCRIPTION OF THE DRAWINGS

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
Fig. 1 is a block diagram of a wireless LAN security system in accordance with the present invention;
Fig. 2 is a block diagram of a key management server of a wireless LAN security system in accordance with the present invention;
Fig. 3 is a flowchart illustrating processes of a wireless LAN security method in accordance with the present invention that are performed in a terminal;
Fig. 4 is a flowchart illustrating processes of a wireless LAN security method in accordance with the present invention that are performed in an access point (AP);
Fig. 5 is a flowchart illustrating processes of a wireless LAN security method in accordance with the present invention that are performed in a key management server; and
Fig. 6 is a diagram illustrating signal transmission between components of a wireless LAN security system in accordance with the present invention.

### DETAILED DESCRIPTION OF EXEMPLARY EMBODIMENTS

The present invention will now be described more fully hereinafter with reference to the accompanying drawings, in which exemplary embodiments of the invention are shown. This invention may, however, be embodied in different forms and should not be construed as limited to the exemplary embodiments set forth herein. Rather, these exemplary embodiments are provided so that this disclosure will be thorough and complete, and will fully convey the scope of the invention to those skilled in the art. Further, it is noted that matters not directly related to the present invention will not be described, such as encryption key generation, an authentication certificate, etc.

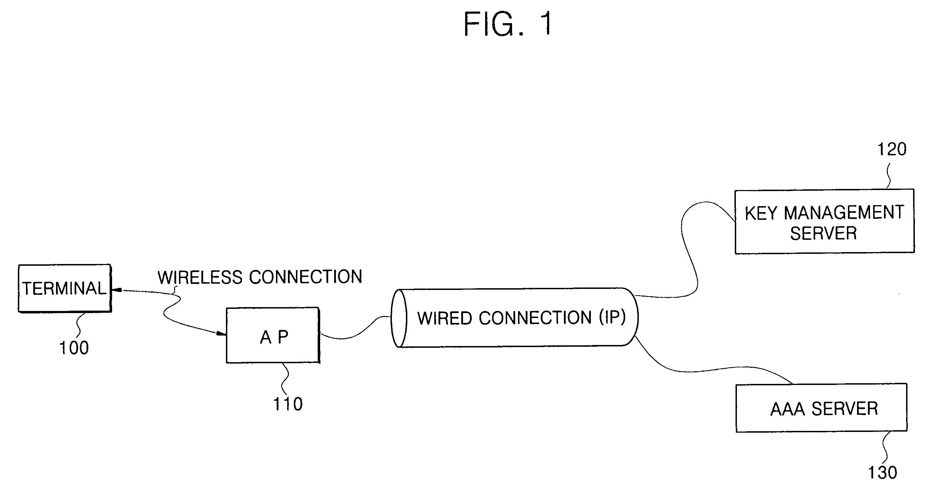

Fig. 1 is a block diagram of a wireless LAN security system in accordance with the present invention.

Referring to Fig. 1, the wireless LAN security system in accordance with the present invention is comprised of a wireless LAN terminal (hereinafter, referred to as "terminal") 100, a wireless LAN access point (hereinafter, referred to as "AP") 110, a key management server 120, and an authentication server (AAA server) 130.

The terminal 100 is provided with a wireless communication service by accessing the AP 110. At this time, the terminal 100 may use an encryption key and an authentication certificate for security in wireless transmission while receiving the service. The terminal 100 in accordance with the present invention can be provided with an encryption key and an authentication certificate to be used for security from the key management server 120. Generally, the terminal 100 can access the key management server 120 through the AP 110.

The AP 110 provides the terminal 100 with a wireless communication service. The AP 110 may also use the encryption key and the authentication certificate for security, and be provided with the encryption key and the authentication certificate from the key management server 120.

The authentication server 130 stores service types with which each terminal 100 can be provided and authentication information such as an authority of each terminal 100, and performs an authentication process or the like to determine whether a service can be provided to the terminal 100.

The key management server 120 manages and controls encryption keys of the terminal 100 and the AP 110 in accordance with the present invention. That is, the key management server 120 stores the encryption key and the authentication certificate used by the terminal 100 and the AP 110, and provides the terminal 100 or the AP 110 with the requested encryption key and the authentication certificate when the terminal 100 or the AP 110 request them.

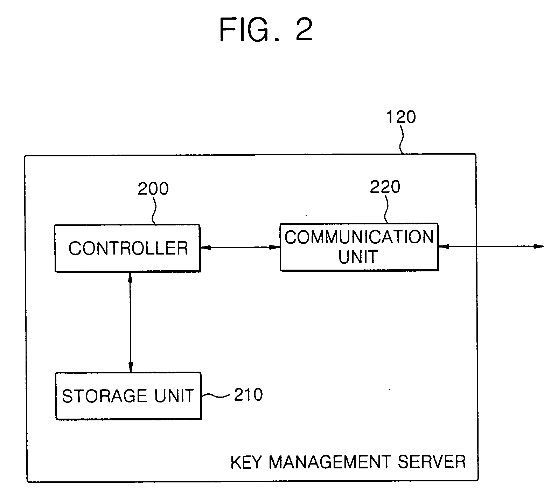

Fig. 2 is a block diagram of a key management server of a wireless LAN security system in accordance with the present invention.

Referring to Fig. 2, the key management server 120 of the present invention is comprised of a controller 200, a storage unit 210, and a communication unit 220.

When the controller 200 is requested to provide an encryption key and an authentication certificate by the terminal 100 or the AP 110, it provides the terminal 100 or the AP 110 with the requested encryption key and the authentication certificate. Alternatively, when the controller 200 is requested to provide the encryption key and the authentication certificate by the terminal 100, or the AP 110, it may determine whether the terminal 100 or the AP 110 has a right to received the encryption key and the authentication certificate, and provide the encryption key and the authentication certificate only to the terminal 100 or the AP 110 that is determined to have the right.

The storage unit 210 stores the encryption key and the authentication certificate for the terminal 100 and the AP 110. The communication unit 220 transmits and receives signals to and from the terminal 100 or the AP 110.

Meanwhile, the key management server 120 can provide the AP 110 with an encryption method used to associate the terminal 100 with the AP 110. To do this, the key management server 120 can store information on the encryption method to be provided to the key management server 120 in the storage unit 210.

Hereinafter, processes of a wireless LAN security method in accordance with the present invention that are performed in each of the terminal 100, the AP 110, and the key management server 120 will be described with reference to accompanying drawings.

Processes in which the terminal 100 obtains the encryption key and the authentication certificate will be described first.

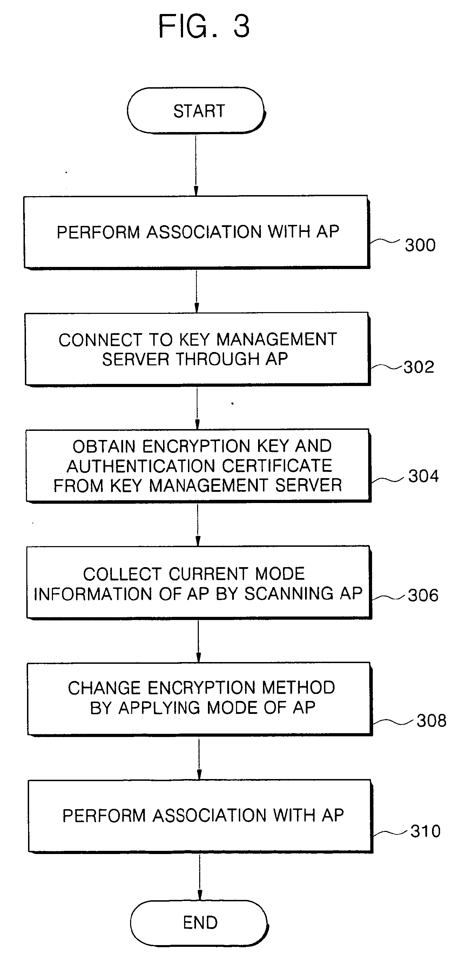

Fig. 3 is a flowchart illustrating processes of a wireless LAN security method in accordance with the present invention that are performed in a terminal.

Referring to Fig. 3, the terminal 100 first performs an association with the terminal 100 (300). The association can be performed by applying open authentication defined in IEEE 802.11. The terminal 100 which has performed the association with the AP 110 is connected to the key management server 120 through the AP 110 (302). The terminal 100 obtains the encryption key and the authentication certificate from the key management server 120 (304). The terminal 100 which has obtained the encryption key and the authentication certificate scans the AP 110 and then collects current mode information of the AP 110 (306). The terminal 100 changes its own encryption method by applying the collected mode information of the AP 110 (308). The terminal 100 performs an association with the AP 110 using the encryption method (310).

Then, processes performed between the terminal 100 and the AP 110 may follow standard association and authentication processes defined in international standards. Such processes will not be described.

Next, processes where the AP 110 obtains the encryption key and the authentication certificate will be described.

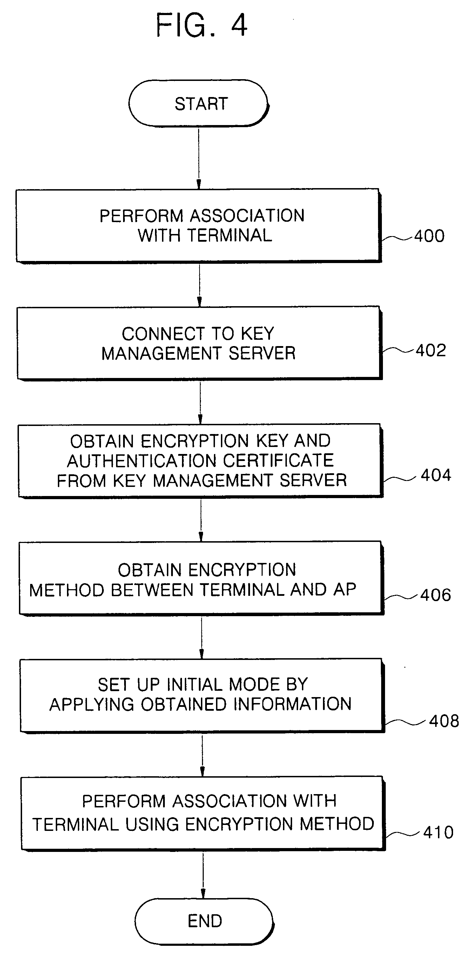

Fig. 4 is a flowchart illustrating processes of a wireless LAN security method in accordance with the present invention that are performed in an access point (AP).

Referring to Fig. 4, the AP 110 performs an association with the terminal 100 (400). Then, the AP 110 is connected to the key management server 120 (402). The AP 110 obtains the encryption key and the authentication certificate from the key management server 120 (404). The AP 110 is also provided with an encryption method to be used between the terminal 100 and the AP 110 from the key management server 120 (406). The AP 110 sets up an initial mode of its own by applying the obtained information (408). The AP 110 performs an association with the terminal 100 using the encryption method (410).

Finally, processes where the key management server 120 provides the terminal 100 or the AP 110 with the encryption key and the authentication certificate will be described.

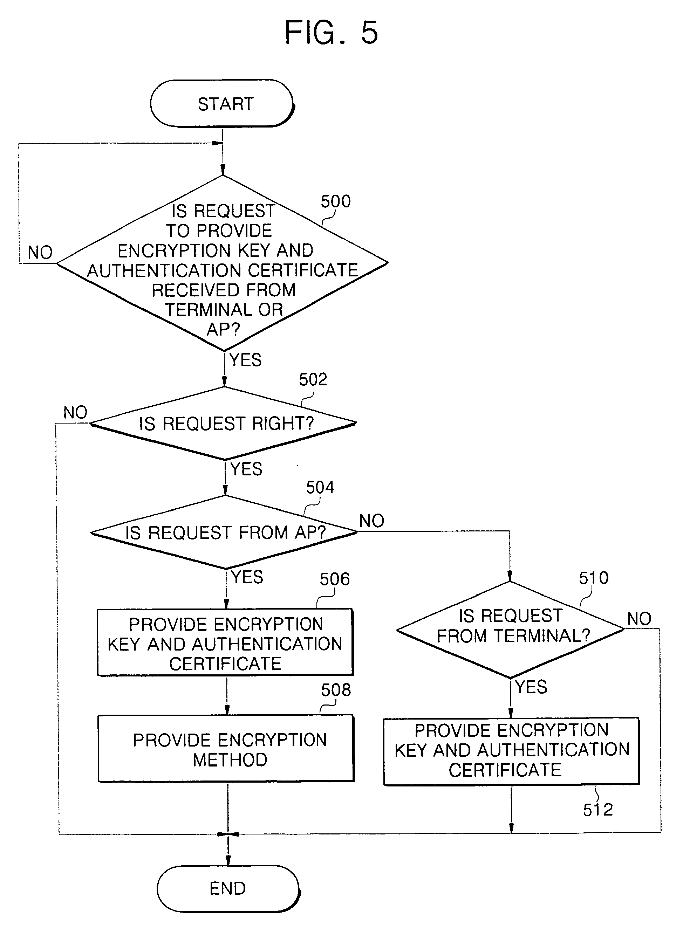

Fig. 5 is a flowchart illustrating processes of a wireless LAN security method in a key management server in accordance with the present invention.

Referring to Fig. 5, the key management server 120 is requested to provide the encryption key and the authentication certificate from the terminal 100 or the AP 110 (500). The key management server 120 which is requested to provide the encryption key and the authentication certificate determines whether the request is from the terminal 110 or the AP 110 that has a right to receive the encryption key and the authentication certificate (502). When the terminal 100 or the AP 110 is determined not to have the right, the key management server 120 does not provide the terminal 100 or the AP 110 with the encryption key and the authentication certificate.

When the terminal 100 or the AP 110 is determined to have the right in step 502, the key management server 120 determines whether the request for the encryption key and the authentication certificate is from the AP 110 (504). When it is determined that the request is from the AP 110, the encryption key and the authentication certificate are provided to the AP 110 (506). Further, the key management server 120 provides the AP 110 with an encryption method defined with respect to the terminal 100 (508).

Meanwhile, when it is determined that the request for the encryption key and the authentication certificate is not from the AP 110 in step 504, the key management server 120 determines whether the request for the encryption key and the authentication certificate is from the terminal 100 (510). Generally, since the request for the encryption key and the authentication certificate is received from the AP 110 or the terminal 100, step 510 may be omitted. When the request for the encryption key and the authentication certificate is from the terminal 100 in step 510, the key management server 120 provides the terminal 100 with the encryption key and the authentication certificate (512).

Below, processes of a wireless LAN security method in accordance with the present invention which are performed among components of the present invention, i.e., among the terminal 100, the AP 110, the key management server 120, and the AAA server 130, will be described with reference to signals exchanged among the components.

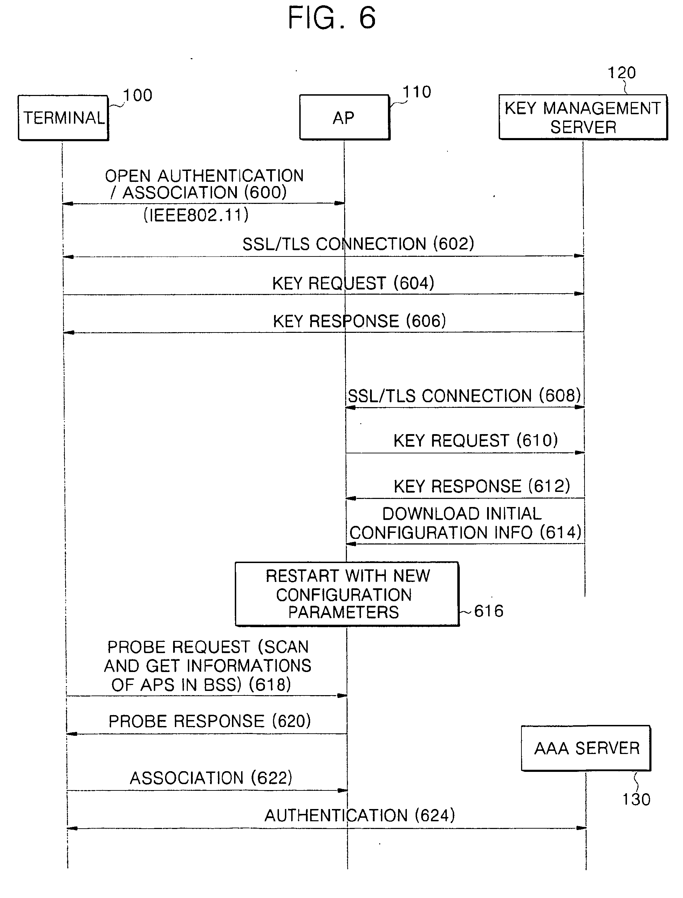

Fig. 6 is a diagram illustrating signal transmission between components of a wireless LAN security system in accordance with the present invention.

The terminal 100 and the AP 110 perform an association by applying open authentication defined in IEEE 802.11 (600). The terminal 100 and the key management server 120 secure a channel between wired and wireless lines by performing an SSL/TLS connection (602). At this time, verification of the authentication certificate is not performed in the TLS connection.

The terminal 100 requests the encryption key and the authentication certificate from the key management server 120 through the SSL/TLS connection (604). The encryption key and authentication certificate which the terminal 100 requests (Key Request) from the key management server 120 can include a pre-shared key for WEP and WPA, and a client authentication certificate which is needed when connecting with the AAA server 130. The terminal 100 is provided (Key Response) with the encryption key and the authentication certificate from the key management server 120 (606).

The terminal 100 stores the provided encryption key and authentication certificate. To do this, the terminal 100 can include a storage unit (not shown). The key and authentication certificate are not read, deleted or changed. Then, the SSL/TLS connection between the terminal 100 and the key management server 120 is terminated.

Meanwhile, the AP 110 performs the SSL/TLS connection with the key management server 120 (608). The AP 110 requests (Key Request) the encryption key and the authentication certificate from the key management server 120 through the SSL/TLS connection (610), and is provided (Key Response) with the requested encryption key and authentication certificate from the key management server 120 (612). Further, the AP 110 is provided with an encryption method (initial configuration information) to be used between the terminal 100 and the AP 110 from the key management server 120 (614). Then, the SSL/TLS connection between the AP 110 and the key management server 120 is terminated.

The AP 110 sets up an initial mode using the encryption method provided from the key management server 120 (616), and restarts with new configuration parameters.

The terminal 100 scans the AP 110 and collects current mode information of the AP 110 to connect to the AP 110 (618 and 620). The terminal 100 changes its own encryption method by applying a mode of the AP 110 and then performs an association with the AP 110 (622). Then, association and authentication processes for the terminal 100 using the new encryption key and authentication certificate are performed through the AAA server 130 (624). These processes can be standard association and authentication processes defined in international standards.

As described above, the present invention enables the key management server to manage the encryption key and the authentication certificate used in the wireless LAN terminal and the wireless LAN access point so that they can be set up in the wireless LAN terminal and the wireless LAN access point without input from a user. By doing this, the present invention can enhance a data protection level in wireless transmission and a security level of user authentication.

While the present invention has been described with reference to exemplary embodiments thereof, it will be understood by those skilled in the art that various changes in form and details may be made therein without departing from the spirit and scope of the present invention as defined by the following claims.

## Claims

1. A wireless local area network (wireless LAN) security system, comprising:
a key management server storing an encryption key and an authentication certificate for system security, and providing the encryption key and the authentication certificate to an apparatus that requests them;
a wireless LAN terminal requesting the encryption key and the authentication certificate from the key management server and receiving them; and
a wireless LAN access point requesting the encryption key and the authentication certificate from the key management server and receiving them.

2. The system according to claim 1, wherein the key management server determines whether the apparatus requesting the encryption key and the authentication certificate has a right to use the encryption key and the authentication certificate, and provides the requested encryption key and authentication certificate to the apparatus only when the apparatus has the right.

3. The system according to claim 1, wherein the key management server further stores an encryption method between the wireless LAN access point and the wireless LAN terminal, and the wireless LAN access point further receives an encryption method of the wireless LAN terminal from the key management server.

4. The system according to claim 3, wherein the wireless LAN access point sets up an initial mode of its own using the encryption method provided from the key management server.

5. The system according to claim 4, wherein the wireless LAN terminal sets up its own encryption method according to the initial mode of the wireless LAN access point obtained in a process of scanning the wireless LAN access point, and performs an association with the wireless LAN access point using the encryption method.

6. The system according to claim 1, wherein the wireless LAN terminal and the wireless LAN access point have address information of the key management server.

7. The system according to claim 1, further comprising an authentication server storing authentication information used to authenticate the wireless LAN terminal when the wireless LAN terminal and the wireless LAN access point are connected with each other.

8. The system according to claim 7, wherein the wireless LAN terminal and the wireless LAN access point have address information of the authentication server.

9. A key management server in a wireless local area network (wireless LAN) security system, comprising:
a storage unit storing an encryption key and an authentication certificate to be provided to a wireless LAN access point and a wireless LAN terminal; and
a controller providing the wireless LAN access point and the wireless LAN terminal with the encryption key and the authentication certificate when the encryption key and authentication certificate are requested by the wireless LAN access point or the wireless LAN terminal.

10. The key management server according to claim 9, wherein the controller determines whether the wireless LAN access point or the wireless LAN terminal requesting the encryption key and authentication certificate has a right to receive the encryption key and the authentication certificate, and provides the requested encryption key and authentication certificate only when the wireless LAN access point or the wireless LAN terminal has the right.

11. The key management server according to claim 9, wherein the storage unit further stores information on an encryption method between the wireless LAN access point and the wireless LAN terminal, the information being provided to the wireless LAN access point.

12. A wireless local area network (wireless LAN) security method performed at a wireless LAN terminal, comprising the steps of:
performing an association with a wireless LAN access point;
accessing a key management server through the wireless LAN access point;
requesting an encryption key and an authentication certificate from the key management server;
receiving the encryption key and the authentication certificate from the key management server; and
performing an association with the wireless LAN access point using the received encryption key and authentication certificate.

13. The method according to claim 12, wherein a first association performed with the wireless LAN access point is performed by applying open authentication.

14. The method according to claim 12, further comprising the step of changing an encryption method of the wireless LAN terminal by scanning the wireless LAN access point to perform an association with the wireless LAN access point using the provided encryption key and authentication certificate and applying a mode of the wireless LAN access point.

15. A wireless local area network (wireless LAN) security method performed at a wireless LAN access point, comprising the steps of:
accessing a key management server;
requesting an encryption key and an authentication certificate from the key management server;
receiving the encryption key and the authentication certificate from the key management server; and
performing an association with a wireless LAN terminal using the received encryption key and authentication certificate.

16. The method according to claim 15, further comprising the steps of:
receiving an encryption method of the wireless LAN terminal from the key management server; and
setting up an initial mode by setting the received encryption method as the encryption method to be used for association with the wireless LAN terminal.

17. The method according to claim 15, further comprising the step of receiving an authentication from the authentication server using the received encryption key and authentication certificate.

18. A wireless local area network (wireless LAN) security method in a key management server, comprising the steps of:
receiving a request for an encryption key and an authentication certificate from a wireless LAN terminal or a wireless LAN access point; and
providing the wireless LAN terminal or the wireless LAN access point with the encryption key and the authentication certificate.

19. The method according to claim 18, further comprising the steps of determining whether the wireless LAN terminal or the wireless LAN access point requesting the encryption key and the authentication certificate has a right to receive the encryption key and the authentication certificate, and providing the requested encryption key and authentication certificate only when the wireless LAN terminal or the wireless LAN access point is determined to have the right.

20. A wireless local area network (wireless LAN) security method, comprising the steps of:
requesting, at a wireless LAN terminal and a wireless LAN access point, an encryption key and an authentication certificate from a key management server;
receiving, at the wireless LAN terminal and the wireless LAN access point, the requested encryption key and authentication certificate; and
performing, at the wireless LAN terminal and the wireless LAN access point, an association between the wireless LAN terminal and the wireless LAN access point.
